# EUROPEAN PATENT SPECIFICATION

(11) **EP 2 023 259 B1**
(45) Date of publication and mention of the grant of the patent: **15.10.2014**
(21) Application number: 08161875.3
(22) Date of filing: 05.08.2008
(51) Int. Cl.: H04L 29/06, G06F 21/55

(54) **Method, computer program and apparatus for controlling access to a computer resource**
Verfahren, Computerprogramm und Vorrichtung zur Steuerung des Zugangs zu einer Computer-Ressource
Procédé, programme informatique et appareil de contrôle d'accès vers une ressource informatique

(30) Priority: 08.08.2007 US 954625 P
(43) Date of publication of application: 11.02.2009
(73) Proprietor: Oracle International Corporation, Redwood Shores, CA 94065 (US)
(72) Inventor: Moyle, Stephen Anthony, Oxford, Oxfordshire OX2 9AU (GB); Galwas, Paul Anthony, St Ives, Cambridgeshire PE27 6HX (GB)
(74) Representative: Skone James, Robert Edmund

(56) References cited:
- US-A1- 2003 217 283
- US-B1- 6 487 666
- QAYYUM A ET AL: "Taxonomy of statistical based anomaly detection techniques for intrusion detection" EMERGING TECHNOLOGIES, 2005. PROCEEDINGS OF THE IEEE SYMPOSIUM ON ISLAMABAD, PAKISTAN SEPT. 17-18, 2005, PISCATAWAY, NJ, USA,IEEE, 17 September 2005 (2005-09-17), pages 270-276, XP010863895 ISBN: 978-0-7803-9247-2
- DATABASE INSPEC [Online] THE INSTITUTION OF ELECTRICAL ENGINEERS, STEVENAGE, GB; 2003, MOYLE S ET AL: "Machine learning to detect intrusion strategies" XP002500007 Database accession no. 8080576 & KNOWLEDGE-BASED INTELLIGENT INFORMATION AND ENGINEERING SYSTEMS. 7TH INTERNATIONAL CONFERENCE, KES 2003. PROCEEDINGS 3-5 SEPT. 2003 OXFORD, UK, vol. 1, September 2003 (2003-09), pages 371-378 Vol.1, Knowledge-Based Intelligent Information and Engineering Systems. 7th International Conference, KES 2003. Proceedings. (Lecture Notes in Comput. Sci. Vol.2773) Springer-Verlag Berlin, Germany ISBN: 3-540-40803-7
- ANDREA PASSERINI ET AL: 'Kernels on Prolog Proof Trees: Statistical learning in the ILP Setting' THE JOURNAL OF MACHINE LEARNING RESEARCH vol. 7, 01 February 2006, pages 307 - 342, XP055034085

## Description

The present invention relates to a method, a computer program and apparatus for controlling access to a computer resource.

### Background of the Invention

Large enterprises are reducing costs by consolidating and aggregating their core information technology (IT) functions and the hardware that they run on, while the need for new computer services increases as their businesses grow through increased reliance on, and exploitation of, IT.

Effective controls are an important part in the security of IT systems, which is being increasingly highlighted by the growing number of regulatory standards to which companies must adhere, e.g. The Sarbanes-Oxley Act (SOX), The Health Insurance Portability and Accountability Act (HIPPA), Payment Card Industry (PCI) Data Security Standard (DSS), etc. A major aspect of these controls is ensuring that people and programs can do only what is appropriate to their roles or functions.

A number of techniques are known for performing such control. For example, one or more of the following approaches may be used:
(i) authentication, e.g. by use of a log-in user name, possibly in conjunction with a log-in password, or other credential such as digital certificate or token. This plausibly identifies who is asking to perform some set of tasks before rights are granted to allow the tasks to be carried out;
(ii) encryption. This is typically used to restrict access to data to only those who have the decryption keys, which in turn is typically controlled by authentication;
(iii) a particular application of encryption is the Virtual Private Network (VPN), which provides secure virtual communication channels over untrusted networks, such as the Internet.

These approaches usually offer poor control over the behaviour of the user or program, since once authenticated, the system typically grants rights to perform a wide range of functions.

Application-level authorization is sometimes also used, where an application specifically grants rights to sets of application-specific functionality. Typically, however, such specific rights have to be set manually for each user and for each of the sets of application-specific functionality (e.g. user A can read from folder Z:\Windows, but not write to it; or user B can read from and write to a file in a shared office electronic calendar when on the office LAN, but can only read from it when connecting over an untrusted network, whereas user C can read from and write to a file in a shared office electronic calendar whether connecting over the office LAN or over an untrusted network). Because these rights have to be set manually, the process is laborious and prone to error and, as a result, has not been cost-effectively generalized to control arbitrary computer programs or services, access to sophisticated data stores, or use of communication protocols, which may also support very large, and potentially infinite, numbers of different functions. Often too much access to resource functionality is provided for fear of accidentally restricting a legitimate business function which results in an over-provisioning of access to functionality above the absolute least required.

The current compliance requirements and threat landscape are such that IT controls need to exert much tighter discrimination over what an authenticated person or program may do, specifically defining what is acceptable behaviour and what is not, and then enforce those rules in a way that removes the need for manual setting of all rights to application-specific functionality.

Herein there is disclosed a process that allows the classification of a set of computer statements against a grammar. In particular, this allows construction of a set of classifications that represent the normal or allowed behaviour of a computer system, referred to herein as a "baseline". The process can efficiently and exactly determine whether a new statement is within that baseline or is new, which, being new, therefore represents potentially dangerous behaviour. A security control can be built on these properties, for example to allow statements that are within the baseline and to block or warn on those that are outside of it.

Herein there is disclosed a computer-implemented method of analysing symbols in a computer system, the symbols conforming to a specification for the symbols, the method comprising: codifying the specification into a set of computer-readable rules; and, analysing the symbols using the computer-readable rules to obtains patterns of the symbols by: determining the path that is taken by the symbols through the rules that successfully terminates, and grouping the symbols according to said paths.

As will be appreciated, the term "symbols" in this context is to be construed broadly. In general, the term "symbols" is used herein in the broad sense as used in the field of Universal Turing Machines. For example, "symbols" includes computer messages, which term is also to be construed broadly and includes for example computer messages in a computer language (including computer instructions, such as executable programs), natural languages in computer-readable form (such as in documents, emails, etc.). "Symbols" also includes computer data in the conventional sense, i.e., typically, abstractions of real world artefacts, etc.

By analysing the symbols into patterns, new symbols can be analysed more efficiently than in prior art techniques, which makes it possible to implement the method in real-time with relatively little computational overhead.

In an embodiment disclosed herein, the method is carried out on new symbols to determine whether the new symbols fit a pattern of data that is known or constitute a new pattern. In practice, if the new symbols fit a pattern that is known, then a decision will already have been made as to whether symbols fitting that known pattern are to be deemed acceptable or not. If the symbols constitute a new pattern, in practice a decision will have been made what to do with symbols that constitute a new pattern, such as "always deem not acceptable" or "send error report", etc.

In an embodiment disclosed herein, the method is initially carried out on training examples of symbols. This allows a base set of patterns of symbols to be built up. These can be analysed by a human domain expert who can determine which patterns relate to acceptable or normal behaviour, so that new symbols can be classified accordingly. In principle, the training examples may be examples of symbols that are known to be acceptable thereby to obtain patterns of symbols that are known to be acceptable. However, more likely in practice is that the training examples will be general and a decision will be made later, after the patterns have been produced and based on the patterns, as to which patterns are to be deemed acceptable or not.

In an embodiment disclosed herein, it is determined to be sufficient to take only a single said path that successfully terminates. As will be explained further below, this improves the efficiency of the method.

In a preferred embodiment disclosed herein, the specification is codified by defining a first order logic that describes the specification; and, the symbols are analysed using the first order logic to obtain patterns of the symbols by: determining the symbols that is taken by each symbol through the first order logic that successfully terminates, and grouping the symbols according to said paths.

The use of first order logic provides for a particularly efficient method and one that is comparatively easy to implement.

In a preferred embodiment disclosed herein, the first order logic has clauses at least some of which are parameterised. In other words, some of the clauses have labels applied thereto, the labels relating to the probability of the clause being "true" in the context of the system in which the symbols are passing.

Preferably, as disclosed herein, at least some of the clauses have a head that is parameterised, the determining step in the analysing step being carried out by determining a path of clauses having a parameterised head through the first order logic that is taken by each symbol that successfully terminates. As will be explained further below, this improves the efficiency of the method.

In a most preferred embodiment disclosed herein, the first order logic is a stochastic logic program having at least some clauses that are instrumented, the determining step in the analysing step being carried out by determining a path of said instrumented clauses through the first order logic that is taken by each symbol that successfully terminates.

In an embodiment disclosed herein, the symbols are messages of a computer language, said specification being the computer language, and wherein the codifying the specification into a set of computer-readable rules comprises defining computer-readable rules that describe the grammar of the computer language.

In another embodiment disclosed herein, the symbols are data.

In an embodiment disclosed herein, the method comprises generalising the symbols by generalising to the paths. This allows generalisation to be tractable.

In more detail, the following is disclosed herein. In the immediately following description, reference will be made principally to computer messages written in a computer language, and to the use of first order logic including stochastic logic programs in particular. However, as will be appreciated from the foregoing and as explained further below, the symbols that are analysed can in general be of any type that conforms to a specification and that techniques other than first order logic may be applied.

In a computer system, messages are used to specify the desired operational behaviour of components in the computer system. Thus, messages are used between components within the computer system, and messages are used by users to gain access to the computer system. High level or "scripting" languages are used to facilitate the use of messages in a computer system. The computer language is defined by a grammar so that messages conform to a known syntax. The grammar of such languages is published so that software developers can ensure that the messages of the software conform to the correct syntax. By way of example only, the syntax for the SQL language is published as an ISO standard.

The preferred embodiments disclosed herein operate by analysing new messages to determine whether they fit a pattern of messages that is deemed to be acceptable. In this context, a message is "new" if it has not been seen by the system previously.

The preferred embodiments disclosed herein are not concerned with generating new rules for new messages, and instead, as stated, are concerned with determining patterns for computer messages. The patterns that are obtained can then be considered, for example "manually" by a human user, to determine whether a computer system has been compromised. Alternatively, the patterns can be automatically analysed by a computer-implemented method, so that messages can be accepted or rejected, preferably effectively in real time and therefore "on the fly".

In the preferred embodiment disclosed herein, the grammar of the computer language of the messages that are to be analysed is defined using first order logic. This may be carried out in a manner that is known per se. For example, the programming language Prolog can be used to describe the grammar of the language as a set of first order logic. This logic is then applied initially to a set of training examples of messages. Such messages are defined so as to be correct syntactically in the context of the language and appropriate in the sense that they are messages that are deemed to be acceptable in the context of usage of the system around which the messages pass. The logic contains clauses. When the logic is applied to the messages, the identity of the clauses along a successful path is noted. In this way, paths of acceptable messages through the logic are obtained. These paths can then be grouped according to similarity. In turn, the messages that follow the respective paths can be grouped according to similarity in this sense, so that patterns of similar messages can be discerned. This means that new messages, which are different from messages used in the training, can then be allocated to patterns of messages that are known to be acceptable, or rejected.

In the preferred embodiment disclosed herein, some of the clauses of the program logic are annotated with probabilities of the clauses being true in the context of the messages in the computer system. By appropriate labelling of these annotated clauses, a very efficient system for analysing the messages into patterns can be obtained. The preferred embodiment disclosed herein uses logic in the form of a stochastic logic program.

In general, for an arbitrary stochastic logic program, it is non-trivial to calculate the correct labels to be applied to the clauses based on the program and a set of training examples. For example, a naive way to build up the labels on the clauses in the stochastic logic program is to count every time that each clause "fires" (i.e. the clause is determined to be "true") when applying the training examples. There are however two immediate problems with this simple approach. First, it may be that there are several "successful" paths through the logic when applying the logic to a particular example, which can cause multiple counting of the same clauses and/or undercounting of the same clauses. Secondly, clauses will still fire and therefore be counted even when the final derivation of the goal along a path of clauses fails. Whilst techniques are available for minimising these problems, this naive method is still nevertheless computationally intensive and therefore cannot successfully be used in practice.

Before discussing a specific example of an embodiment disclosed herein in more detail, a more formal discussion of some aspects will now be given.

A logic program P is a conjunction of universally quantified clauses C₁,...,Cₙ. Each clause is a disjunction of literals Lₖ. A goal G is a disjunction of negative literals ← G₁,...,Gₘ. A definite clause is a clause with at most one positive literal (which is known as the head). A definite logic program contains only definite clauses. All clauses in a logic program with heads having the same predicate name and arity make up the definition of the clause.

A stochastic logic program (SLP) is a definite logic program where some of the clauses are parameterised with non-negative numbers. In other words, an SLP is a logic program that has been annotated with parameters (or labels). A pure SLP is an SLP where all clauses have parameters, as opposed to an impure SLP where not all clauses have parameters. A normalised SLP is one where parameters for clauses that share the same head predicate symbol and arity sum to one. If this is not the case, then it is an unnormalised SLP.

As will be understood from the following more detailed description, the preferred embodiments can be regarded as a parser that is a non-normalised stochastic logic program, i.e. only a subset of the definitions or "clauses" have parameters, and the parameters for any definition do not sum to one.

As has been mentioned, typical approaches to fitting an SLP to a group of examples call each example in the presence of the SLP. Each time a parameterised clause is called, its firing count is incremented. Once all of the examples have been processed, the firing counts for a definition are then summed and the labels that are given to the clauses are normalised versions of the firing counts. However, again as mentioned, the runtime overhead of keeping track of the parameterised definitions is significant, particularly given the problem of what to do when the firing clauses do not lead to a successful derivation for the example. This is overcome in the preferred embodiment by making the assumption that only single success paths are important in accepting a particular message. This means that only the first successful derivation path through the SLP needs to be recorded. It is not necessary to take into account any other or all other successful derivation paths when calculating the parameters to be applied to the clauses of the SLP. This assumption of using single success paths through the SLP contributes to making the method more efficient. Taking only a single (the first) success path is sufficient in the present context because the principal purpose is to cluster the messages with respect to the grammar.

Another contributor to the efficiency of the preferred embodiment is the use of so-called instrumentation. In particular, the heads of certain clauses are parameterised, which is referred to herein as "instrumented". This can be performed at compile time. In an example, each clause that is part of a definition to be labeled is expanded at compile time, and an additional instrumentation literal slp_cc/1 is placed immediately after the head of the clause.

For example the clause p(X) :- r(X). will be compiled to p(X) :- slp_cc(5), r(X). say (where it is the fifth clause to be instrumented by the compiler).

A relevant compiler code snippet is shown below:

```
 slp_clause(File, '$source_location'(File, Line):Clause) :-
     slp_clause(File, Line, Label, Clause0),
     expand_term(Clause0, Clause1),
     gen_cid(File, N),
     assert_label(Label, N, File),
     (    Clause1 = (Head :- Body0)
     ->   Clause = (Head :- slp_cc(N), Body),
          slp_body(Body0, Body, File)
     ;    Clause = (Clause1 :- slp_cc(N)),
          Clause1 = Head
     ),
     general_term(Head, Def),
     assert(cid_def(N, File, Def)).
```

Data structures for keeping track of compiled clauses, their modules, and the context in which they are being utilised are initialised by the compiler.

The main objective of the system is to collect the sequence of all instrumented predicates that were used in the successful derivation of a goal G. Any nondeterministic predicates that were tried and failed in the process are ignored: only the first successful derivation is used in accordance with the assumption discussed above (though backtracking is not prohibited by the methods described herein).

The preferred runtime system makes use of extensions to the standard Prolog system called global variables. These are efficient associations between names (or "atoms") and terms. The value lives on the Prolog (global) stack, which implies that lookup time is independent of the size of the term. The global variables support both global assignment (using nb_setval/2) and backtrackable assignment using (b_setval/2). It is the backtrackable assignment of global variables that are most useful for the preferred runtime system disclosed in our copending US and EP patent applications.

The runtime system with the instrumentation works as follows. When a goal G is called using slp_call/1, a global variable slp_path is created to store the sequence of successful instrumented predicates. When an instrumentation literal slp_cc/1 is called, the path so far is retrieved from the global variable slp_path to which the clause identifier is added before the slp_path is updated. All of these assignments are backtrackable should any subsequent sub-goal fail.

An example of the kernel of the runtime system is shown below:

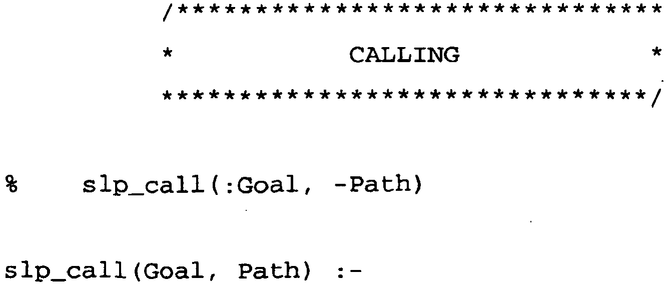

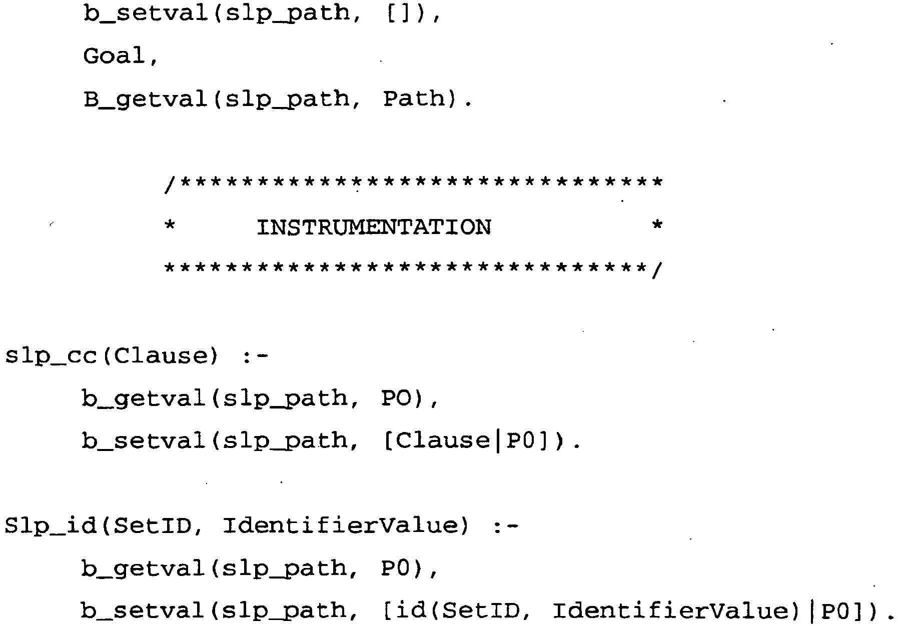

(The slp_identifier/2 literal will be discussed below.)

For example, consider a parser in accordance with a preferred embodiment disclosed in our copending US and EP patent applications that is written to accept SQL statements as a Prolog module sql. The SQL grammar as published has several hundred clausal definitions. In one example of the preferred method, the following eleven clausal definitions of the SQL grammar are defined (by a human operator) as being worthy of instrumenting:

```
 :- slp
     select_list//0,
     derived_column//0,
     join//0,
     expression//0,
     query_specification//0,
     derived_column//0,
     set_quantifier//0,
     column_name_list//0,
     expression_list//0,
     show_info//0,
     cmp//0.
```

The SLP can be used to determine the path of the derivation of the parse of a message in the following manner:

```
 ?- slp_call(parse(
                "select * from anonData where anonID =
                'nX19LR9P'"
                ), Path).
 Path = [21, 26, 17, 20, 19, 13, 12, 4]
```

The numbers returned in the path sequence are the identifiers of the clauses for the instrumented predicate (given in reverse order). In other words, by applying the SLP parser to the message, the identity of the clauses along the successful path through the SLP parser can be obtained (and are written to the variable "Patch"). This allows the path to be clustered with other similar paths. During training time, when the messages to which the system is applied are training examples, this "clusters" the messages into groups or sets of syntactically similar messages, irrespective of the semantics or content of the messages. (It will be understood that the patterns or clusters of any particular example will depend on the precise training examples that are given to the system during the training period and the instrumentation given to the program during compile time.) During runtime, messages are similarly analysed and effectively allocated to the patterns obtained during the training stage at training time. Significantly in the present context, even new messages, which literally have not been seen by the system previously, are allocated to the patterns obtained during the training stage. Thus, this provides the important feature of analysing messages in the computer system into patterns, even if the messages are new.

In a practical example, the overhead of the instrumentation on the runtime system has been found to be low compared with prior art approaches.

One weakness of associating normalised firing counts with probability distributions is that of "contextualisation". A good "fit" of probabilities would be when the observed path frequencies match that of the so-called Markov chain probabilities of the path, where this is calculated by the product of the observed individual clause labels in a path. For example, consider a parser with a "terminal" that is an integer, that is being used in accepting log items from syslog that records DHCPD messages. (A terminal symbol is a symbol that actually occurs in the language concerned.) The integer terminal could appear in any of the date, time, and IP address portions of the messages, all of which in general end in an integer. It has been found that the fit between firing counts and calculated Markov chain distribution is poor in such circumstances where instrumented terminals belong to different contexts. It has also been found that the Markov chain probabilities fit the observed path probabilities in situations where there are no such context ambiguities. The context of the particular terminal is "lost".

To at least partially remedy these effects, the preferred embodiment disclosed herein uses set identifiers. These are terms that are defined to belong to a particular set.

For example, consider a portion of an SQL parser (written as a Definite Clause Grammar or DCG ) where it is determined that elements of the sets "table" and "column" are of interest. The slp_identifier/2 literal specifies the set name (either "table" or "column" in this case), and the value to associate with the set.

```
table_name -->
    [ delimited(TName), period, delimited(CName) ],
    { concat_atom([TName, '.', CName], Name),
      slp_identifier(table, Name) }
    !.
```

```
table_name -->
    [ identifier(Name) ],
    { slp_identifier(table , Name) }.
```

```
 column_name -->
    [ identifier(Name) ],
    { slp_identifier(column, Name) }.
```

In the same manner as clause paths are generated using firing clauses as described above, such paths are augmented with their set name-value pair when set identifiers are used. The runtime system for this again uses backtrackable global variables to keep track of the set name-value pairs for successful derivations. (The use of a slp_identifier/2 literal is shown in the example of the kernel of the runtime system given above.)

If the previous SQL example is run again but with the slp_identifiers above installed, the following is obtained:

```
?- slp_call(
    parse(
   "select * from anonData where anonID = 'nX19LR9P'"
   ), Path).
```

```
Path =
    [21, 26, id(3, anonID), 17, 20, 19, id(2, anonData),
    13, 12, 4]
```

The element id(3, anonID) says set number 3 (corresponding to items of type "column") contains the value anonID.

It will be understood that the clause paths that are obtained represent a form of generalisation from the training examples. From a textual parsing perspective, this provides a mapping from a string of ASCII characters to tokens and, with respect to a background-instrumented parser, a mapping to clause paths. In the preferred embodiment, the clause paths may include SLP identifier set name-value pairs as discussed above. Each clause identifier maps to a predicate name/arity. In this sense, a predicate is a family of clauses. A clause path can be mapped to a variable "predicate path".

Given that the raw messages are reduced to sequences in the preferred embodiment disclosed herein, it is then possible to perform traditional generalisation techniques more efficiently because it is possible to generalise to the paths rather than to the whole Prolog program that describes the computer language. For example, the known "least general generalisations" method according to Plotkin can be used. Given that in the preferred embodiment disclosed herein the messages are represented as simple "atoms", the least general generalisations can be carried out in a time that is proportional to the length of the sequence. In general, the maximum time required to carry out this known least general generalisation is proportional to the maximum sequence length and the number of examples.

In summary, the preferred embodiments disclosed herein allow messages to be analysed to cluster the messages into patterns. A human domain expert can then inspect the clusters to decide which are to be regarded as "normal" and therefore acceptable, and which are to be regarded as "abnormal" and therefore not acceptable.

To simplify this analysis by humans, and given that the cluster paths are not particularly understandable to humans, the clusters can be portrayed with a single exemplar, and the user given the ability to drill down into the examples that belong to the cluster. This has been shown to communicate the cluster and its properties effectively to human users. The paths behind the clusters can also be shown to users. In another example, the paths behind the clusters can be shown graphically by way of a parse map.

It is possible to extend the mappings described above, particularly the use of set identifiers for contextualisation. For example, generalisations of interesting or key predicates can be defined. To illustrate this, the example given below considers how query specifications interact with particular tables:

```
:-    classify
     query_specification//0,
     id(table).
```

This can show for example different access methods to a table by their clusters.

In summary, given the language or similar definition of the specification for the data, the preferred embodiments disclosed herein initially use training examples to cluster computer messages or other data into groups of the same or similar type. New messages can then be clustered to determine whether they fit one of the patterns. A human expert will decide which of the patterns are regarded as normal and which are abnormal. In an intrusion detection or prevention system, this can then be used to accept or reject new messages accordingly. In another example, the message analysis can be used to build models of normal usage behaviour in a computer system. This can be used to audit past behaviour, as well as to provide active filters to only allow messages into and out of the system that conform to the defined model of normality. The techniques can be applied to obtain patterns from any type of data that conforms to a known specification. This includes for example data such as financial data, including data relating to financial transaction, which allows models of usage patterns to be obtained; so-called bioinformatics (e.g. for clustering sub-sequences of DNA); natural language messages, which can be used in many applications, e.g. the techniques can be used to form a "spam" filter for filtering unwanted emails, or for language education; design patterns for computer programs, engineering drawings, etc.

The use of stochastic logic programs that are instrumented as described herein for the preferred embodiments disclosed herein leads to very efficient operation, making real time operation of the system possible with only minimum overhead. However, as mentioned, other techniques are available.

Thus the methods disclosed herein allow the classification of a set of computer statements against a grammar. In particular, this allows a construction of a set of classifications that represent the normal or allowed behaviour of a computer system, termed herein a baseline. The process can efficiently and exactly determine whether a new statement is within that baseline or is new and therefore represents new potentially dangerous behaviour. A security control can be built on these properties, for example to allow statements that are within the baseline and to block or warn on those that are outside of it.
Prior document ANDREA PASSERINI ET AL: "Kernels on Prolog Proof Trees: Statistical learning in the ILP Setting", THE JOURNAL OF MACHINE LEARNING RESEARCH, discloses the idea of path similarity based clustering of training messages.

In the paper entitled "Taxonomy of statistical based anomaly detection techniques for intrusion detection" by A. Qayyum et al, there is disclosed an intrusion detection system. The paper acknowledges that security threats to computer systems have raised the importance of intrusion detection systems. A method for statistical based anomaly detection techniques is disclosed.

US-A-2003/0217283 discloses a network security system including a system data store capable of storing a variety of data associated with an encrypted computer network and communications transmitted thereon, a communication interface supporting communication over a communication channel and a system processor. Data corresponding to communications transmitted over the encrypted communication network are received. One or more tests are applied to the received data to determine whether a particular communication represents a potential security violation.

In a paper submitted to the knowledge-based Intelligent Information and Engineering Systems International Conference, KES 2003 by Moyle and Heasman, there is disclosed the use of logic programming as a suitable formalism for specifying the semantics of attacks on a computer system. Logic programs are used as a means of detecting attacks in previously unseen inputs. A machine learning approach provided by inductive logic programming is used to induce detection clauses from examples of attacks.

### Summary of Invention

The invention is defined by the appended claims.

The preferred embodiments of the present invention permit fine-grained control over access to shared IT services or resources over what are termed herein (virtual) "channels", thereby allowing the flexibility of multiple accesses to aggregated critical IT resources without compromising the selectivity of the access control. Baselines are provided for virtual channels to shared computer resources such that each channel secures not only the behaviour that a person or computer program is allowed to perform over that channel, but also the conditions that must apply for the person or computer program to access the resource. Such channels enforce roles. The preferred embodiments of the present invention also permit the measurement of roles, thereby facilitating the definition of effective channels.

The segmentation of the auditing and control of access to shared computer resources is a primary consideration for major corporations, since it is necessary to control the usage characteristics of access by many people, systems and applications. The approach described here significantly improves the security and flexibility of deployment compared with the prior art, thereby allowing the business to widen its use of IT services and data resources, while allowing the economies of scale that result from consolidating those IT resources.

Depending on a number of factors, including for example the particular implementation and the nature of the consumers and the computer resources, it may be more efficient to check messages against the conditions first and then against the baseline or against the baseline first and then against the conditions.

Embodiments of the present invention will now be described by way of example with reference to the accompanying drawings, in which:
Fig. 1 shows schematically users accessing computer resources in a computer system;
Fig. 2 shows schematically an example of a process for controlling access to a computer resource in accordance with an embodiment of the present invention; and,
Fig. 3 shows schematically an example of a process for the measurement of roles in accordance with an embodiment of the present invention.

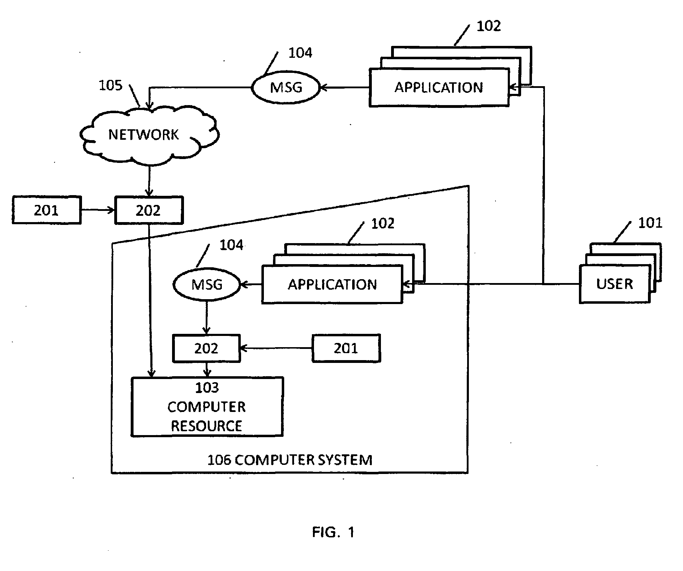

Referring first to Fig. 1, in general a plurality of users 101 and applications 102 use a computer resource 103 by issuing messages 104 either over a network 105 or directly between sub-systems on a computer system 106. The computer resources 103 may in general be of any type, including for example a database, file system, computer service in a Service Oriented Architecture, or communication protocol. A monitoring process 202 has a baseline 201 which contains a set of messages that have been classified against a grammar for the messages, and each message-classification (or "cluster") has a set of actions to perform associated with that particular type of message.

The baseline 201 containing the clusters of classified messages is preferably obtained using the method discussed above. The method can be regarded as a parser for the grammar which is represented as a definite logic program P that is a conjunction of universally quantified definite clauses C₁,...,Cₙ, where each clause is a disjunction of literals Lₖ that have at most one positive literal. A goal G is a disjunction of negative literals ← G₁,...,Gₘ. A definite logic program contains only definite clauses. All clauses in a logic program with heads having the same predicate name and arity make up the definition of the clause. Some of the clauses are identified (called "instrumented" here) by a unique number.

The system classifies each message by collecting the sequence of all instrumented predicates that were used in the successful derivation of a goal G. Any nondeterministic predicates that were tried and failed in the process are ignored: only the first successful derivation is used.

The ordered set of instrumented values (called a cluster) is associated with one or more actions. Actions include, for example: sending a message that a particular message 104 has been received, blocking a message, replacing a message with another, creating an audit log of the message, and triggering another program or service.

The monitoring process 202 receives a copy of those messages 104 and compares each with the baseline 201 which comprises a set of clusters, each with associated actions, as discussed above. When the monitoring process 202 matches the message with a cluster in the baseline, the process 202 performs the associated actions. If it does not match the message with a cluster in the baseline 201, the process 202 performs another previously specified set of actions.

The monitoring process 202 can be used to implement a range of security controls, including intrusion detection, intrusion prevention, and selective logging.

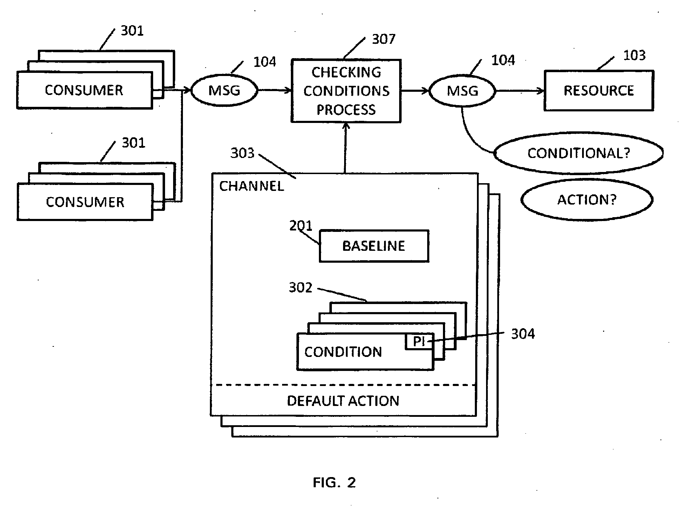

Referring now to Fig. 2, the baseline 201 defines and controls the behaviour of a consumer 301 (which may be for example a user system or program) of a resource 103 by limiting the messages that it can send to the resource 103. However, many consumers 301 may wish to use the same shared resource 103, yet the security demands that each is to be permitted to perform only certain behaviours.

For example, a database may contain data that is used for a series of distinct business functions in different legal jurisdictions, such that the rules that govern access to the same data records may differ depending who accesses them and from where. For example, it may be appropriate for UK staff to query personal details of UK customers, but not those who live in France, and vice versa. However, these customer records may be held in the same database tables.

Those consumers 301 who perform equivalent functions are associated with or issued a baseline 201 that defines and controls their behaviour, using the process described above. There can be multiple such baselines 201 that protect access to the same resource 103. For example, for the specific example mentioned above, one baseline 201 may secure access to customer records by UK staff from the UK; another baseline 201 may secure access to French customer records from France; and a third baseline 201 may prevent access to these records by people or programs in other countries.

In the present preferred embodiment, it is also deemed to be appropriate to grant access to the resource 103 only when certain conditions 302 are met. In the present context, a condition 302 is a function of a set of primitives. The function may be a Boolean function for example. These primitives may be of very many different types, including for example:
(i) the time of day in a specified interval, e.g. during normal working hours or outside normal working hours;
(ii) the logical location of the consumer 301 and whether it matches a specified list of locations, e.g. working from a computer known to be on a wired network in an office, rather than say a laptop that is connected to an external wireless network, say in a local café. The logical location of the consumer 301 may be based on for example one or more of: IP address, computer, MAC address, program name, identifier, etc.;
(iii) the geographic location in a specified region. This may be determined by a Global Positioning System (GPS) for example;
(iv) using a network path that is in a set of specified paths, e.g. ensuring that the traffic passes through a specific set of secured network devices, such as routers and switches, rather than over an arbitrary, untrusted network path (such as the internet);
(v) the consumer 301 authenticates with one or more credentials, e.g. password, digital certificate, Kerberos token, which plausibly identifies them using one or more factors;
(vi) the consumer 301 can prove that they have access to some secret information, such as a cryptographic key, for example by being able to demonstrate that they can decrypt information known to the checking-condition-process 307; and,
(vii) the message follows one or more other messages that were accepted in some specified order.

Each condition 302 can also contain a priority index 304, which defines the order in which to test the conditions 302, as described further below. The purpose of the priority index is to disambiguate conditions when more than one is true.

The combination of a baseline 201 and a set of conditions 302 fully defines the rules that allow control of the access behaviour and is termed herein a "channel" 303. A channel 303 typically defines and enforces a role. For example, for the specific example mentioned above, one channel may provide access to UK staff to UK customer records; another for French staff to French customer data; and a third may deny access to others.

The resource 103 is protected by a plurality of channels 303. For example, the table that contains customer records that apply to more than one country could be accessed through the three channels 303 summarised above.

There is also a default action associated with each cluster, which is performed whenever the conditions 302 of a channel 303 are not met.

Since the baseline 201 contains specific clauses that define behaviour against the grammar, these channels 303 limit the fine-grained behaviour that is allowed. For example, the UK staff may be allowed to view a customer's address and data of birth, using specific types of database queries in the grammar, whereas the French staff may not be required to use different queries to view the address and may be not be allowed to make any query that accesses the date of birth.

Each time a new message is received, a process 307 of checking the conditions 302 is performed by carrying out the following steps:
(i) determine whether the message meets the conditions 302 in a channel 303 (see further below);
(ii) if yes: classify the message against the grammar and determine the action to take from the baseline 201, as described above;
(iii) if no: perform the default action associated with the channel 303.

The preferred checking-the-conditions process 307 consists of these steps, performed each time a new message is received:
(i) determine the values associated with the message of all the parameters required to evaluate the conditions in all the conditions 302 in all the channels 303 that protect the resource 103; and,
(ii) order the conditions by the priority index 304 and for each condition 302:
   (a) if there are no more conditions: exit this process with result: the message does not meet any condition,
   (b) evaluate the condition,
   (c) if condition is true: exit this process with result: the message matches a condition.

For example, a given member of staff may have rights to perform certain database queries access on some records, both when in the office during office hours over a wired network and when outside the office, e.g. at any time of day over less trustworthy networks, such as wireless LANs at home or in a public place.

The method discussed in detail above describes how to cluster messages in the infinite space of a computer language grammar. This can be applied to measure and classify behaviour in accessing a resource 103 and thus to facilitate the effective definition of channels 303.

A channel 303 enforces a role whereby a person or computer, for example, may perform certain functions on shared resources 103 and may not perform all other functions. As discussed above, prior art techniques require the roles to be predefined, for example by specifying manually the associated baselines. However, it is often the case that defining effective roles in complex organisations that meet both the security needs and people's operational processes is complex and expensive. The preferred embodiments provide a method that measures roles that are being used, thereby providing a more effective method for defining baselines and increasing security enforcement.

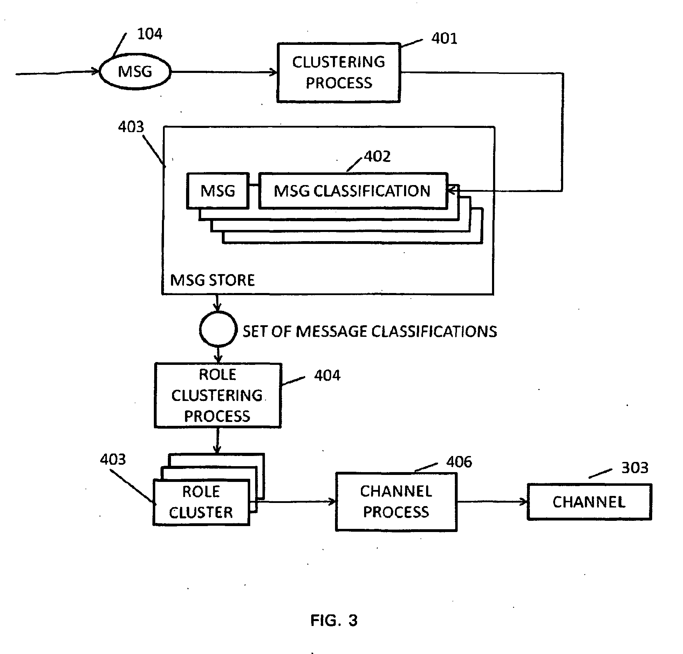

Thus, referring to Fig. 3, the grammar clustering process 401 classifies each message 104 against a grammar, as described above, and adds the message classification 402 and puts it into the message store 403.

In particular, the grammar clustering process 401 classifies each message 104 against a grammar to obtain a cluster that is identified by a unique cluster ID and an ordered set of instrumented predicates, again as described above, and adds one or more other attributes that classify the source of the message 104. These attributes may include for example:
(i) the time at which each message 104 was received;
(ii) the logical location of the consumer 301, which may be based on one or more of: IP address, computer, MAC address, program name, identifier, etc.;
(iii) the identity of the authenticated consumer 301, e.g. user name, identity on digital certificate or Kerberos token, etc.;
(iv) the geographic location in a specified region; and,
(v) using a network path that is in a set of specified paths;
(vi) the consumer 301 can prove that they have access to some secret information, such as a cryptographic key, for example by being able to demonstrate that they can decrypt information known to the checking-condition-process 307;
(vii) the message follows one or more other messages that were accepted in some specified order.

A role clustering process 404 operates on sets of message classifications 402 in the message store 403 to find either or both of (i) frequent occurrences of ordered sets of clusters of attributes of computer messages sent to the computer resource and (ii) occurrences of specified ordered sets of clusters of attributes of computer messages sent to the computer resource, wherein each attribute corresponds to one of the conditions. Each is a role cluster 405. Known algorithms may be used in the role clustering process 404.

For example, the role clustering process 404 may consider all messages from a given consumer 301 at a given location, and determine from the message store 403 for a given period of time the set of sequences in order, or time, that correspond to frequently performed activities.

This process can also extract special cases of sequences that correspond to certain specific messages or sequence of messages. For example, a database transaction can be detected by knowing the cluster ID on the database query language that correspond to, or define, the start and end of a transaction.

The process can also extract sequences that make use of the same values as major parameters in a set of messages. For example, this may include the value that corresponds to a price used in an e-business transaction.

The role clustering process 404 clusters on a definite logic program in which the goals represent, for example, that cluster ID 2 occurs immediately before cluster ID 5, before ID 7, etc. in the sequence {7,5,2}; and is able to distinguish this sequence from {7,5} and {7,4,2,8}, etc. Each of these is a role cluster 405, which is identified by a unique role cluster ID.

Using the role clustering process 404, it is also possible to induce role clusters 405 that correspond, for example, to specific people at given locations, doing functions that correspond to particular clusters. For example: {(person 1, at office doing cluster {3,7}), (person 2, at home doing clusters {5,7,2}),...}.

Each role cluster 405 corresponds to a likely role of usage of the system: it identifies a sequence of behaviours (being the set of cluster IDs on the grammar) and the conditions of the consumers.

A channel process 406 takes a role cluster 405 and defines a channel 303, comprising a baseline 201 and a set of corresponding conditions 302. The channel process 406 sets the actions associated with some or all cluster IDs, which may be done automatically, or manually or both.

For example, the role cluster: {(person 1, at office doing cluster {3,7}), (person 2, at home doing clusters {5,7,2}),...} could have the action "warn" associated with it, while another similar role cluster: {(person 1, at office doing cluster {3,7}), (person 2, at office doing clusters {5,7,2}),...} could be given the action "allow".

The preferred embodiments of the present invention permit fine-grained control to shared IT services or resources 103 over virtual channels 303, thereby allowing the flexibility of multiple accesses to aggregated critical IT resources 303 without compromising the selectivity of the access control. Baselines 201 are provided for virtual channels 303 to shared computer resources 103 such that each channel 303 secures not only the behaviour that a person or computer program is allowed to perform over that channel, but also the conditions that must apply for the person or computer program to access the resource 103. Such channels 303 enforce roles. The preferred embodiments of the present invention also permit the measurement of roles, thereby facilitating the definition of effective channels 303.

Embodiments of the present invention have been described with particular reference to the examples illustrated. However, it will be appreciated that variations and modifications may be made to the examples described within the scope of the present invention.

## Claims

1. A computer-implemented method of controlling access to a computer resource (103) in which a computer message (104) is sent to the computer resource from a consumer (301), the computer message (104) conforming to a grammar defining a computer language specifying the computer messages, the method comprising:
A) analysing the computer message (104) using a logic program that codifies the computer language into a set of clauses of first order logic, the logic program thereby being operable to parse the computer messages, wherein at least some of the clauses of the logic program are instrumented by a unique identifier, by:
- determining, by using the logic program to parse the computer message (104), the path of the derivation of the parse of the computer message (104) by the logic program collecting the sequence of identifiers of all instrumented clauses that are used in the successful derivation;
B) comparing said computer message (104) with a baseline (201) containing a training set of computer messages which are classified according to whether or not each of the computer messages of the training set represents acceptable behaviour in the context of the computer resource (103), the baseline having been generated by:
- analysing the computer messages of the training set using the logic program by determining, by using the logic program to parse the computer message, the path of the derivation of the parse of the computer message of the training set by the logic program collecting the sequence of identifiers of all instrumented clauses that are used in the successful derivation, each sequence of identifiers collected during training time being a cluster; and
- grouping computer messages of the training set according to the collected sequence of identifiers into said clusters;
C) if the comparison of said computer message with the baseline (201) determines that the collected sequence of identifiers of said computer message (104) matches with the collected sequence of identifiers of a cluster of the baseline that is identified as representing acceptable behaviour in the context of the computer resource (103), the method further comprising permitting said computer message (104) to be passed to the computer resource (103),
D) else the method further comprising not passing said computer message (104) to the computer resource (103).

2. A method according to claim 1, further comprising the steps of generating the baseline (201), and wherein generating the baseline (201) further comprises:
identifying, in response to user input, clusters of messages of the training set that represent acceptable behaviour in the context of the computer resource.

3. A method according to claim 1 or 2, further comprising:
checking a computer message (104) being sent from a consumer (301) to a computer resource (103) to determine whether the computer message (104) meets all of a set of one or more specified conditions (302); and
comparing said computer message (104) with said baseline (201) only if said computer message (104) meets all of the set of one or more specified conditions (302).

4. A method according to claim 1 or 2, wherein if the comparison of said computer message (104) with the baseline (201) determines that said computer message (104) represents acceptable behaviour in the context of the computer resource (103), the method further comprising:
checking said computer message (104) to determine whether the computer message (104) meets all of a set of one or more specified conditions (302); and,
only permitting said computer message (104) to be passed to the computer resource (103)if said computer message (104) meets all of the set of one or more specified conditions (302).

5. A method according to claim 3 or claim 4, wherein if said computer message (104) does not meet all of the set of one or more specified conditions (302), said computer message (104) is not passed to the computer resource (103).

6. A method according to any of claims 3 to 5, wherein the set of one or more specified conditions (302) includes plural conditions (302), and the checking the computer message (104) comprises checking the computer message (104) against the plural conditions (302) in one or more predetermined order(s).

7. A method according to any of claims 3 to 6, wherein the conditions (302) include one or more of: the time of day said computer message (104) was sent; the logical location of the consumer (301); the geographic location of the consumer (301); the network path over which said computer message (104) is being sent to the computer resource (103); whether the consumer (301) has authenticated itself and the nature of any such authentication; whether the consumer (301) prove that they have access to specified secret information; whether the message (104) follows one or more other messages that were accepted in some specified order.

8. A method according to any of claims 3 to 7, wherein the conditions (302) are determined by:
identifying at least one of (i) frequent occurrences of ordered sets of clusters of attributes of computer messages sent to the computer resource (103) and (ii) occurrences of specified ordered sets of clusters of attributes of computer messages sent to the computer resource (103), wherein each attribute corresponds to one of the conditions (302).

9. A method according to claim 1, wherein each cluster of the baseline is associated with one or more actions, the method further comprising, if the comparison of said computer message with the baseline (201) determines that said computer message (104) matches with a cluster of the baseline, performing said one or more actions.

10. A method according to claim 9, further comprising, if the comparison of said computer message with the baseline (201) determines that said computer message (104) does not match with a cluster of the baseline, performing another previously specified set of actions.

11. A computer program comprising program instructions for causing a computer to carry out a method according to any of claims 1 to 10.

12. A computer programmed to carry out a method according to any of claims 1 to 10.

## Patentansprüche

1. Computerimplementiertes Verfahren zur Steuerung des Zugangs zu einer Computerressource (103), bei dem eine Computernachricht (104) von einem Verbraucher/Nutzer (301) an die Computerressource gesendet wird, wobei die Computernachricht (104) mit einer Grammatik übereinstimmt, die eine Computersprache definiert, welche die Computernachrichten spezifiziert, wobei das Verfahren umfasst:
A) Analysieren der Computernachricht (104) unter Verwendung eines Logikprogramms, das die Computersprache in einen Satz von Klauseln der Logik erster Ordnung kodifiziert, wodurch das Logikprogramm betriebsfähig ist, die Computernachrichten zu parsen, wobei zumindest einige der Klauseln des Logikprogramms von einem einzigartigen Bezeichner instrumentiert werden, durch:
- Ermitteln, unter Verwendung des Logikprogramms zum Parsen der Computernachricht (104), des Pfades der Ableitung von der Parse der Computernachricht (104), indem das Logikprogramm die Sequenz von Bezeichnern aller instrumentierten Klauseln sammelt, die bei der erfolgreichen Ableitung verwendet werden;
B) Vergleichen der Computernachricht (104) mit einer Basislinie (201), die einen Trainingssatz von Computernachrichten enthält, die übereinstimmend damit klassifiziert sind, ob jede der Computernachrichten des Trainingssatzes akzeptables Verhalten im Zusammenhang mit der Computerressource (103) darstellt oder nicht, wobei die Basislinie durch Folgendes generiert worden ist:
- Analysieren der Computernachrichten des Trainingssatzes unter Verwendung des Logikprogramms durch Ermitteln, unter Verwendung des Logikprogramms zum Parsen der Computernachricht, des Pfades der Ableitung der Parse der Computernachricht des Trainingssatzes, indem das Logikprogramm die Sequenz von Bezeichnern aller instrumentierten Klauseln sammelt, die bei der erfolgreichen Ableitung verwendet wurden, wobei jede Sequenz von Bezeichnern, die während Trainingszeit gesammelt wurde, ein Cluster ist; und
- Gruppieren der Computernachrichten des Trainingssatzes übereinstimmend mit der gesammelten Sequenz von Bezeichnern in Clusters;
C) wenn der Vergleich der Computernachricht mit der Basislinie (201) ermittelt, dass die gesammelte Sequenz von Bezeichnern der Computernachricht (104) der gesammelten Sequenz von Bezeichnern eines Clusters der Basislinie entspricht, die als akzeptables Verhalten im Kontext der Computerressource (103) darstellend identifiziert ist, umfasst das Verfahren ferner die Erlaubnis, dass die Computernachricht (104) zur Computerressource (103) geleitet wird,
D) sonst umfasst das Verfahren ferner, dass die Computernachricht (104) nicht an die Computerressource (103) geleitet wird.

2. Verfahren nach Anspruch 1, das ferner die Schritte zum Generieren der Basislinie (201) umfasst und, wobei das Generieren der Basislinie (201) ferner umfasst: Identifizieren, als Reaktion auf Benutzereingabe, von Clusters von Nachrichten des Trainingssatzes, die akzeptables Verhalten im Kontext der Computerressource darstellen.

3. Verfahren nach Anspruch 1 oder 2, ferner umfassend:
Prüfen einer Computernachricht (104), die von einem Verbraucher (301) an eine Computerressource (103) gesendet wurde, um zu ermitteln, ob die Computernachricht (104) alle eines Satzes von einer oder mehreren spezifizierten Bedingungen (302) erfüllt; und
Vergleichen der Computernachricht (104) mit der Basislinie (201) nur, wenn die Computernachricht (104) alle eines Satzes von einer oder mehreren spezifizierten Bedingungen (302) erfüllt.

4. Verfahren nach Anspruch 1 oder 2, wobei, wenn der Vergleich der Computernachricht (104) mit der Basislinie (201) ermittelt, dass die Computernachricht (104) akzeptables Verhalten im Kontext der Computerressource (103) darstellt, das Verfahren ferner umfasst:
Prüfen der Computernachricht (104), um zu ermitteln, ob die Computernachricht (104) alle eines Satzes einer oder mehrerer spezifizierten Bedingungen (302) erfüllt; und,
nur Erlauben, dass die Computernachricht (104) an die Computerressource (103) geleitet wird, wenn die Computernachricht (104) alle des Satzes einer oder mehrerer spezifizierten Bedingungen (302) erfüllt.

5. Verfahren nach Anspruch 3 oder Anspruch 4, wobei, wenn die Computernachricht (104) nicht alle des Satzes einer oder mehrerer spezifizierten Bedingungen (302) erfüllt, die Computernachricht (104) nicht an die Computerressource (103) geleitet wird.

6. Verfahren nach einem beliebigen der Ansprüche 3 bis 5, wobei der Satz einer oder mehrerer spezifizierten Bedingungen (302) mehrfache Bedingungen (302) einschließt und das Prüfen der Computernachricht (104) das Prüfen der Computernachricht (104) gegen mehrfache Bedingungen (302) in einer oder mehreren vorgegebenen Reihenfolge(n) umfasst.

7. Verfahren nach einem beliebigen der Ansprüche 3 bis 6, wobei die Bedingungen (302) eins oder mehr des Folgenden einschließen: die Tageszeit, zu der die Computernachricht (104) gesendet wurde; den logischen Ort des Verbrauchers (301); den geografischen Ort des Verbrauchers (301); den Netzwerkpfad, über den die Computernachricht (104) an die Computerressource (103) gesendet wird; ob sich der Verbraucher (301) selbst authentisiert hat und die Natur irgendeiner solchen Authentisierung; ob die Verbraucher (301) beweisen, dass sie Zugang zu geheimer Information haben; ob die Nachricht (104) einer oder mehrerer anderen Nachrichten folgt, die in irgendeiner spezifizierten Reihenfolge akzeptiert wurden.

8. Verfahren nach einem beliebigen der Ansprüche 3 bis 7, wobei die Bedingungen (302) durch Folgendes ermittelt werden:
Identifizieren zumindest eins von (i) häufige Vorfälle geordneter Clusters von Attributen von Computernachrichten, die an die Computerressource (103) gesendet wurden und (ii) Vorfälle spezifizierter geordneter Clusters von Attributen von Computernachrichten, die an die Computerressource (103) gesendet wurden, wobei jedes Attribut einer der Bedingungen (302) entspricht.

9. Verfahren nach Anspruch 1, wobei jeder Cluster der Basislinie mit einer oder mehrerer Aktionen assoziiert ist, wobei das Verfahren ferner, wenn der Vergleich der Computernachricht mit der Basislinie (201) ermittelt, dass die Computernachricht (104) mit einem Cluster der Basislinie übereinstimmt, das Ausführen der einen oder mehreren Aktionen umfasst.

10. Verfahren nach Anspruch 9, das ferner, wenn der Vergleich der Computernachricht mit der Basislinie (201) ermittelt, dass die Computernachricht (104) nicht mit einem Cluster der Basislinie übereinstimmt, das Ausführen eines anderen vorher spezifizierten Satzes von Aktionen umfasst.

11. Computerprogramm, das Programmbefehle umfasst, die bewirken, dass ein Computer ein Verfahren nach einem beliebigen der Ansprüche 1 bis 10 ausführt.

12. Computer, der programmiert ist, ein Verfahren nach einem beliebigen der Ansprüche 1 bis 10 auszuführen.

## Revendications

1. Procédé mis en oeuvre sur ordinateur et servant à contrôler l'accès à une ressource informatique (103), au cours duquel un message informatique (104) est envoyé à la ressource informatique par un utilisateur (301), le message informatique (104) étant conforme à une grammaire définissant un langage informatique qui spécifie les messages informatiques, le procédé consistant:
A) à analyser le message informatique (104) en se servant d'un programme logique qui codifie le message informatique en un ensemble de clauses d'une logique de premier ordre, le programme logique permettant ainsi d'analyser les messages informatiques, **caractérisé en ce qu'**au moins certaines clauses du programme logique sont instrumentées par un identificateur unique, en
- déterminant, au moyen du programme logique employé pour analyser le message informatique (104), le chemin de dérivation de l'analyse du message informatique (104) effectuée par le programme logique qui recueille la séquence des identificateurs de toutes les clauses instrumentées utilisées dans la dérivation qui a abouti;
B) à comparer le message informatique (104) à une ligne de référence (201) qui contient un ensemble d'apprentissage des messages informatiques qui sont classés selon que chacun des messages informatiques de l'ensemble d'apprentissage représente ou non un comportement acceptable dans le contexte de la ressource informatique (103), la ligne de référence ayant été générée:
- par analyse des messages informatiques de l'ensemble d'apprentissage utilisant le programme logique en déterminant, au moyen du programme logique employé pour analyser le message informatique, le chemin de dérivation de l'analyse du message informatique de l'ensemble d'apprentissage effectuée par le programme logique qui recueille la séquence des identificateurs de toutes les clauses instrumentées utilisées dans la dérivation qui a abouti, chaque séquence des identificateurs recueillie pendant la période d'apprentissage constituant une grappe; et
- en regroupant les messages informatiques de l'ensemble d'apprentissage selon la séquence recueillie des identificateurs dans ces grappes;
C) si la comparaison du message informatique en question à la ligne de base (201) détermine que la séquence recueillie des identificateurs du message informatique (104) correspond à la séquence recueillie des identificateurs d'une grappe dans la ligne de référence qui est identifiée comme étant représentative d'un comportement acceptable dans le contexte de la ressource informatique (103), le procédé comporte par ailleurs l'autorisation de faire passer le message informatique (104) à la ressource informatique (103),
D) dans le cas contraire, le procédé comporte par ailleurs l'interdiction de faire passer le message informatique (104) à la ressource informatique (103).

2. Procédé selon la revendication 1, comportant par ailleurs les étapes qui consistent à générer la ligne de référence (201), et **caractérisé en ce que** la génération de la ligne de référence (201) comporte par ailleurs les étapes qui consistent:
à identifier, suite à l'introduction faite par l'utilisateur, des grappes de messages de l'ensemble d'apprentissage qui représentent un comportement acceptable dans le contexte de la ressource informatique.

3. Procédé selon la revendication 1 ou 2, qui consiste par ailleurs:
à vérifier un message informatique (104) envoyé par un utilisateur (301) à une ressource informatique (103) en vue de déterminer si le message informatique (104) répond à la totalité parmi un ensemble comportant une ou plusieurs conditions spécifiées (302); et
à comparer le message informatique (104) à la ligne de référence (201) uniquement si ce message informatique (104) répond à la totalité parmi un ensemble comportant une ou plusieurs conditions spécifiées (302).

4. Procédé selon la revendication 1 ou 2, **caractérisé en ce que** si la comparaison du message informatique (104) à la ligne de référence (201) détermine que ce message informatique (104) représente un comportement acceptable dans le contexte de la ressource informatique (103), le procédé consiste par ailleurs:
à vérifier le message informatique (104) en vue de déterminer si le message informatique (104) répond à la totalité parmi un ensemble comportant une ou plusieurs conditions spécifiées (302); et
à ne permettre le transfert du message informatique (104) à la ressource informatique (103) que si le message informatique (104) répond à la totalité parmi un ensemble comportant une ou plusieurs conditions spécifiées (302).

5. Procédé selon la revendication 3 ou la revendication 4, **caractérisé en ce que** si le message informatique (104) ne répond pas à la totalité parmi un ensemble comportant une ou plusieurs conditions spécifiées (302), ce message informatique (104) n'est pas transféré à la ressource informatique (103).

6. Procédé selon l'une quelconque des revendications 3 à 5, **caractérisé en ce que** l'ensemble comportant une ou plusieurs conditions spécifiées (302) comprend une pluralité de conditions (302), et la vérification du message informatique (104) consiste entre autres à vérifier le message informatique (104) en le comparant à la pluralité de conditions (302) dans un certain, ou bien dans plusieurs, ordres prédéteminés.

7. Procédé selon l'une quelconque des revendications 3 à 6, **caractérisé en ce que** les conditions (302) comprennent un ou plusieurs des éléments suivants: l'heure de la journée à laquelle le message informatique (104) a été envoyé; l'emplacement logique de l'utilisateur (301); l'emplacement géographique de l'utilisateur (301); le chemin du réseau emprunté par le message informatique (104) pendant son transfert à la ressource informatique (103); si l'utilisateur (301) s'est authentifié et aussi la nature de cette authentification; si l'utilisateur (301) a démontré qu'il a droit d'accéder à certaines informations secrètes spécifiées; si le message (104) fait suite à un ou plusieurs autres messages qui ont été acceptés dans un certain ordre spécifié.

8. Procédé selon l'une quelconque des revendications 3 à 7, **caractérisé en ce que** les conditions (302) sont déterminées:
en identifiant au moins l'une parmi (i) les occurences fréquentes de suites ordonnées de grappes d'attributs pour les messages informatiques transférés à la ressource informatique (103), et (ii) les occurences de suites ordonnées spécifiées de grappes d'attributs pour les messages informatiques transférés à la ressource informatique (103), **caractérisé en ce que** chaque attribut correspond à l'une des conditions (302).

9. Procédé selon la revendication 1, **caractérisé en ce que** chaque grappe de la ligne de référence est associée à une ou plusieurs actions, le procédé consistant par ailleurs, si la comparaison du message informatique à la ligne de référence (201) détermine que ce message informatique (104) correspond à une grappe dans la ligne de référence, à exécuter cette ou ces actions.

10. Procédé selon la revendication 9, qui consiste par ailleurs, si la comparaison du message informatique à la ligne de référence (201) détermine que ce message informatique (104) ne correspond pas à une grappe dans la ligne de référence, à exécuter une autre série d'actions spécifiées auparavant;.

11. Programme informatique comprenant des instructions du programme qui font exécuter, par l'ordinateur, le procédé selon l'une quelconque des revendications 1 à 10.

12. Ordinateur programmé de manière à exécuter le procédé selon l'une quelconque des revendications 1 à 10.
